# EUROPEAN PATENT SPECIFICATION

(11) **EP 2 856 409 B1**
(45) Date of publication and mention of the grant of the patent: **14.02.2024**
(21) Application number: 13796703.0
(22) Date of filing: 30.05.2013
(51) Int. Cl.: G06Q 30/00, G06K 7/10, G06K 19/06, G06K 7/015, G07D 7/20

(54) **ARTICLE AUTHENTICATION APPARATUS HAVING A BUILT-IN LIGHT EMITTING DEVICE AND CAMERA**
PRODUKTECHTHEITSPRÜFVORRICHTUNG MIT EINER EINGEBAUTEN LICHTEMITTIERENDEN VORRICHTUNG UND EINER KAMERA
APPAREIL D'AUTHENTIFICATION D'ARTICLE COMPORTANT UN DISPOSITIF ÉLECTROLUMINESCENT ET UN APPAREIL DE PRISE DE VUES INTÉGRÉS

(30) Priority: 30.05.2012 HK 12105265; 10.08.2012 HK 12107864; 21.01.2013 HK 13100895
(43) Date of publication of application: 08.04.2015
(73) Proprietor: Infotoo International Limited, Kowloon (HK)
(72) Inventor: LAU, Tak Wai, Kwun Tong, Kowloon Hong Kong (CN); LAM, Wing Hong, Kwun Tong, Kowloon, Hong Kong (CN)
(74) Representative: Abel & Imray LLP
(86) International application number: PCT/IB2013/054463
(87) International publication number: WO 2013/179250

(56) References cited:
- EP-A1- 1 941 421
- EP-A1- 2 397 967
- CN-A- 1 738 362
- CN-A- 1 738 362
- CN-A- 101 727 637
- US-A1- 2007 090 190
- US-A1- 2011 309 151
- US-A1- 2012 074 227

## Description

### FIELD

The present disclosure relates to authentication apparatus and methods, and more particularly to authentication apparatus and methods for verifying authenticity of a target authentication device by taking an image thereof.

### BACKGROUND

Counterfeiting is a serious problem which not only disrupts normal commercial or non-commercial activities but also poses safety as well as security issues to the general public. Many types of anti-counterfeiting measures are dedicated to help fight counterfeiting. For example, genuine goods carry authentication devices such as authentication tags or codes to help verify authenticity of goods or products. However, even such authentication tags or codes can become the subject of rampant counterfeiting and enhanced security measures to combat counterfeiting are desirable.

High precision authentication devices such as those comprising digitally coded security patterns are very useful in combating counterfeiting because digitally coded information subsisting in the security patterns are very sensitive and are difficult to counterfeit. The moiré pattern is a good example of authentication devices comprising digitally coded security patterns which has been widely used to enhance reliability of authentication devices. The term 'authentication device' in the present context generally means authentication device for use in combating counterfeiting.

While authentication devices comprising digitally coded security patterns such as moiré or moiré-type patterns are very useful in the combat of counterfeits, the highly precise and delicate nature of the security patterns mean that a high fidelity reproduction of the security patterns is often needed to facilitate reliable authentication.

CN 1738 362 discloses an image-taking module for use with a mobile phone capable of recognizing authenticity of merchandise, the module comprising a lens, a light sensing chip and a light emitting source and is arranged to take an image of a bar code when the bar code is aligned with the lens axis. Many modern mobile electronic devices such as mobile phones, smart phones, tablet computers, or notebook computers have built in digital cameras and should be useful for taking an image of an authentication device for verification of authenticity.

It would be advantageous if an improved authentication apparatus and/or improved image capturing method are provided such that a high fidelity image of an authentication device can be obtained.

### DESCRIPTION OF FIGURES

The disclosure will be described by way of non-limiting example with reference to the accompanying Figures, in which:-
Figure 1 is functional block diagram of an example apparatus suitable for operation as an authentication apparatus according to the present disclosure,
Figure 1A is a first view of an example authentication apparatus having the functional block diagram of Figure 1
Figure 1B is a second view of the example authentication apparatus of Figure 1A,
Figure 2A and 2B depict an example operation using the authentication apparatus of Figure 1A to take an image of an example authentication device respectively at a first location and a second location,
Figure 3A and 3B depict schematic representations of an image of the example authentication device appearing on the display of the example authentication apparatus of Figure 1A corresponding to capturing at the locations of Figures 2A and 2B respectively ,
Figure 4 is a schematic representation depicting an example distribution of pixel brightness levels of a first captured image of the example authentication device taken by the example authentication apparatus at the relative position as depicted in Figures 2A and 3A,
Figure 4A depicts a copy of the first example captured image of the example authentication device,
Figure 4B depicts an example decision flow to determine acceptability of the first captured image,
Figure 5 is a schematic representation depicting an example distribution of pixel brightness levels of a second captured image of the example authentication device taken by the example authentication apparatus at the relative position as depicted in Figures 2B and 3B,
Figure 5A depicts a copy of the example second captured image of the example authentication device,
Figure 5B depicts an example decision flow to determine acceptability of the second captured image,
Figure 6 depicts an example flow chart to devise a visual guide with reference to an upper threshold brightness level,
Figure 7 depicts an example flow chart to devise a visual guide with reference to a lower threshold brightness level,
Figure 8 is an example flowchart depicting execution of an example authentication process on an example authentication apparatus, and
Figures 9, 9A, and 9B are screen views depicting example operation of the authentication process of Figure 8 on the example authentication apparatus of Figure 1A.

### DESCRIPTION

The present invention provides an authentication apparatus for verifying authenticity of a target authentication device according to claim 1 and an authentication image capturing method, according to claim 11, for use with such an authentication apparatus comprising an image capturing device, a light emitting device to project light for illuminating an object to be captured by the image capturing device, and a processor. The authentication image capturing method may be part of an authentication method for verifying authenticity of a target authentication device containing security features such as digitally coded security features. Therefore, the authentication image capturing method is also an authentication method.

The authentication method includes using the authentication apparatus to generate a visual guide for guiding a user to aim the apparatus at a target authentication device on execution of an authentication process such that when the apparatus is aimed at the target authentication device following guidance of the visual guide to capture an image of the target authentication device, the content and quality of fidelity of the captured image is sufficient to facilitate verification of authenticity of the target authentication device.

The visual guide may be devised such that when the apparatus is aimed at the target authentication device so that an alignment device on the visual guide is aligned with a corresponding alignment device on the target authentication device, an image of the target authentication device thus captured will result in an image having a sufficient content to facilitate verification of authentication. A sufficient content in the present context means that the quantity of image data of the target authentication device is sufficient to make decision on authenticity of the target authentication device. The dimension and shape of the visual guide is designed to capture a sufficient content.

The visual guide may be devised such that when the apparatus is aimed at the target authentication device so that the alignment device on the visual guide is aligned with the corresponding alignment device on the target authentication device, an image of the target authentication device thus captured will result in an image having a sufficient quality of fidelity to facilitate verification of authentication. A sufficient quality of fidelity in the present context means the captured image of the target authentication device contains a collection of image data which is a sufficiently true, accurate or correct representation of the target authentication device to facilitate making of determination on the authenticity of the target authentication device.

The visual guide may be devised empirically using a reference apparatus and a reference sample of the target authentication device (the 'reference authentication device'). For example, the visual guide may be devised by taking sample images of the reference authentication device at different relative locations between the image capturing device and the reference authentication device which meets the content requirement while under illumination of the light emitting device and to select a relative location which generates a correct authentication result as the visual guide. A correct authentication result would mean that the requirement on the quality of fidelity on the image data is satisfied. It will be appreciated that the relative locations will be represented by images shown on different portion of the display of the reference apparatus without loss of generality. Where there is more than one location which gives a correct authentication result, the relative location that gives an image that best satisfies predetermined brightness thresholds is selected to set the visual guide. For example, the relative location maybe one corresponding to where the sample image has a more even distribution of pixel intensity will be selected as the location to set the visual guide. In an example, where there is more than one location which gives a correct authentication result, the relative location which is furthest away from locations where the quality of image data fidelity is not satisfied is selected as the relative location to set the visual guide,

The visual guide may be devised using image processing techniques. For example, a sample authentication device having the same digitally coded features arranged in the same manner as the target authentication device but extend over the entire image capturing region of the image capturing device may be used as a calibration sample to calibrate the reference apparatus to set the visual guide. As the same digitally coded features are arranged in the same manner as the target authentication device, the same light reflection and distortion properties can be expected. An extended image of the sample authentication device which is taken by having the sample authentication device covering the entire image capturing region of the image capturing device while under illumination of the light emitting device and meeting the content requirement would mean that calibration can be done with respect to a single extended image of the sample authentication device.

The reference authentication device or the sample authentication device may be used as a calibration sample to set a visual guide meeting the fidelity requirements.

In calibration operation, an operator will aim the apparatus at the calibration sample and capture an image of the calibration sample while under operational illumination of the light emitting device. The digital data embedded in the captured image of the calibration sample are then recovered and analysed by the processor or manually to examine the quality of fidelity of the digitally data embedded in the captured image. The visual guide will be set at a region where the quality of fidelity satisfies a predetermined fidelity threshold. Where the region can accommodate more than one visual guide, the visual guide may be selectively set at a region where the brightness levels of pixels associated with the captured sample image can best satisfy predetermined brightness thresholds. In the description herein, the terms 'fidelity', 'truthfulness', 'correctness', 'accuracy' and the respective adjectives will be interchangeably used when the context so permits or requires.

In an example, the method includes devising the visual guide such that brightness levels on an image of the calibration sample which was captured by the image capturing device while under operational illumination of the light emitting device are within a predetermined range of brightness levels suitable for verification of authenticity. The range of predetermined threshold brightness levels may be selected to be a range within which the quality of the captured image of the calibration sample is sufficient to facilitate verification of authenticity. The resolution of a captured image is an aspect of quality which relates to factors affecting verification of authenticity.

The predetermined range of brightness levels may include an upper brightness threshold level and/or a lower brightness threshold level. The upper brightness threshold level may be set at a level above which there is a good likelihood that the image has been distorted by over-illumination. For example, the upper threshold brightness level may be set near the maximum intensity level available to the pixels. The maximum intensity corresponds to brightness saturation such that further increase in brightness at the calibration sample will not increase the intensity level at the pixels. The lower brightness threshold level may be set at a level below which there is a good likelihood that the image has been distorted by under-illumination. For example, the lower threshold brightness level may be set near the minimum intensity level available to the pixels. The minimum intensity corresponds to darkness saturation such that further increase in darkness at the calibration sample will not increase the darkness level at the pixels.

The display may be a built-in display of the reference apparatus or an external display. For example, the reference apparatus may have a video output or a projector output to cause display of the image on the external display.

In an example, the method includes identifying a display portion of a display associated with the reference apparatus, the display portion being such that an image of the calibration sample corresponding to an image appearing on that display portion when captured such that the brightness levels on the captured image are within the predetermined range of brightness levels will provide sufficient data to facilitate verification of authentication. The method includes aiming the reference apparatus at calibration sample such that an image of the calibration sample will appear on a portion of a display, capturing an image of the calibration sample while under illumination of the light emitting device, analyzing brightness levels on the captured image, devising the visual guide on that display portion when the brightness levels on the captured image are within the predetermined range of brightness levels.

In an example, the method includes selecting a display portion having a more optimal distribution of brightness levels on the captured image for authentication verification as the visual guide when there are more than one display portions satisfying requirements.

In an example, the method includes selecting a display portion that is outside an axis of light projection which corresponds to a line of the brightest illumination by the light emitting device on the sample target authentication device to devise the visual guide.

In an example, the method is in the form of a downloadable software application for running on an apparatus comprising a processor, and the downloadable application is apparatus specific such that the application is to be downloaded for a specific apparatus with reference to the model number of the apparatus to run the authentication method. The apparatus may be a staple microprocessor based device such as a smart phone, a tablet computer or a digital camera.

The method may be implemented in hardware, software, firmware or a combination thereof. In an example, the method is implemented on a smart phone such that the smart phone operates as an authentication apparatus running the authentication image capturing method upon actuation by a user.

The present invention provides an authentication apparatus, according to claim 1, for verifying authenticity of a target authentication device. The authentication apparatus comprises an image capturing device, a built-in light emitting device for illuminating an object to be captured by the image capturing device, a visual guide to guide a user to aim the apparatus at a target authentication device, and a processor. The visual guide is such that when the apparatus aims at a target authentication device following guidance of the visual guide on execution of an authentication process, the content and quality of fidelity of an image of the target authentication device captured by the image capturing device under operational illumination of the light emitting device are sufficient to facilitate verification of authenticity of the target authentication device.

The visual guide is also such that when the apparatus is aimed at the target authentication device following guidance of the visual guide, the brightness levels on an image of the target authentication device captured by the image capturing device while under operational illumination of the light emitting device are within a predetermined range of brightness levels to facilitate verification of authenticity with reference to the captured image of the target authentication device.

In an example, the processor is to process the captured image to generate a visible representation of security features embedded in the target authentication device for a user to verify authenticity of the target authentication device.

In an example, the visual guide includes an alignment device for aligning with a corresponding alignment device on the target authentication device. The visual guide and the light emitting device may be arranged such that an axis of light projection corresponding to a line of the brightest illumination by the light emitting device falls outside security features of the target authentication device when the apparatus is aimed at the target authentication device following guidance of the visual guide such that the alignment device of the visual guide and the corresponding alignment device on the target authentication device are aligned.

In an example, the apparatus includes an associated display device and the processor is to generate the visual guide on the associated display device.

The apparatus may include a projector and the processor is to generate the visual guide for projection by the projector.

The target authentication device may comprise an embedded security device having hidden security features, such as digitally coded security features, and the processor is to process the captured image of the target authentication device to extract the security features for display.

Example of authentication methods and authentication apparatus will be described in more details below with reference to the accompanying Figures.

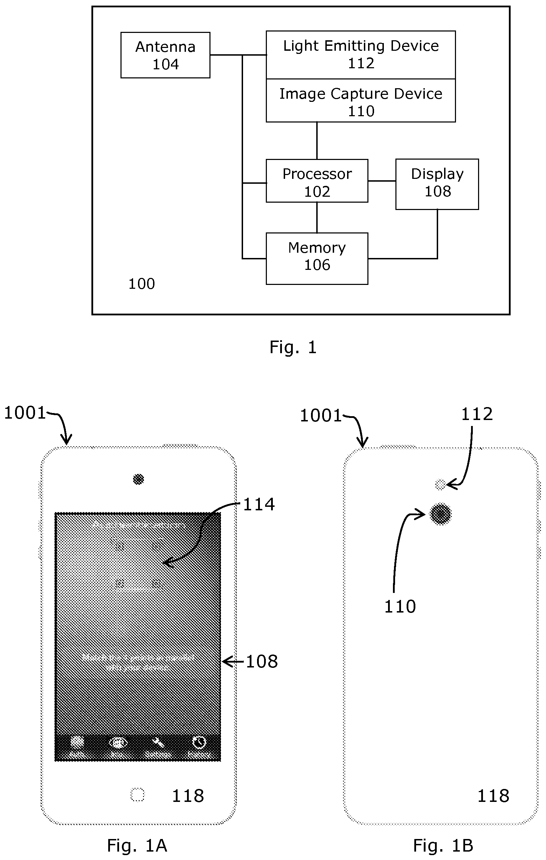

The functional block diagram of Figure 1 depicts an example apparatus **100** which is capable of operating as an authentication apparatus and comprises a processor **102,** an antenna **104,** a memory **106,** a display **108,** an image capturing device **110,** a light emitting device **112** and a visual guide **114.** A smart phone is an example of such an apparatus. The display screen is to facilitate visual interface with a user and usually comprises a matrix of liquid crystal cells which collectively form an LCD display. An LCD display of many electronic devices having more than 1 million pixels is common place nowadays. For example, a typical LCD display of smart phones have the pixel size of 320x480 pixels, 640x960 pixels, or 640x1136 pixels distributed in a 10-cm diagonal screen. The image capturing device comprises an image collector which is optically coupled to an image sensor. The image collector may be a lens, an assembly of lens or a pin-hole device. The image sensor includes a matrix of image sensing elements such as an array of charge coupled devices (CCD). The number of image sensing elements is approximately at a 1:1 correspondence with the pixel size of the display screen but the actual number of images sensing elements can be different depending on the application and design. Each image sensing element forms a pixel of an image collected by the image capturing device and each of the image sensing elements is deployed to detect the brightness level of light imparting on it. A digital image is formed when the entirety of data representing the brightness levels of individual pixels is collected by the processor in spatial order and stored.

The light emitting device is to provide supplemental illumination on an object when an image of the object is to be taken by the image capturing device under an ambient condition when the ambient light level is insufficient. Supplemental illumination is often required when the ambient illumination is below a level which is needed for the image capturing device to produce an image of sufficient quality of fidelity to facilitate verification of authenticity. The light emitting device of this example comprises LED lamps which are arranged to emit a beam of light along an axis of light projection towards a target object. The axis of light projection is characteristic of the light emitting device and defines a direction of brightest illumination such that the portion of the object intercepting or encountering the axis of light projection will experience the brightest supplemental illumination.

The visual guide is to provide visible guidance to assist a user to aim the authentication apparatus at a target authentication device so that when the authentication apparatus is aimed at the target authentication device following the guidance of the visual guide, an image of the target authentication captured by the image capturing device of the authentication apparatus will contain a sufficient quantity of necessary authentication data and have a sufficient quality of fidelity to facilitate verification of authenticity.

So that a captured image of the target authentication device contains sufficient quantity of data to facilitate verification of authenticity, the visual guide defines an image alignment device such as an image alignment window such that when the apparatus is aimed at the target authentication device with the image alignment device on the target authentication device aligned with a corresponding image alignment device on the visual guide, the captured image will have a sufficient quantity of necessary authentication data to facilitate verification. In general, the data image will be sufficient in quantity if the captured image has captured the portion of the target authentication device containing all the security data which are embedded in the target authentication device. In many modern day applications, the security data are digitally encoded in the target authentication device.

So that a captured image of the target authentication device have a sufficient quality of fidelity to facilitate verification of authenticity, the visual guide defines an illumination alignment device such as an illumination alignment window such that when the apparatus is aimed at the target authentication device with the illumination alignment device on the target authentication device aligned with a corresponding an illumination alignment device on the visual guide, the supplement illumination falling on the authentication device or at least the portion of the authentication device to be authenticated will result in an image at the image capturing device such that the brightness levels of the pixels are within a prescribed range of brightness levels which is to facilitate verification of authenticity. Specifically, the prescribed range of brightness levels is a range within which the brightness levels of all the pixels of the captured image are neither over-exposed nor under-exposed. An image or a portion of an image is over-exposed when taken under over-illumination of the light emitting device such that the brightness level of the pixel reaches the saturation intensity. An image or a portion of an image is under-exposed when taken with insufficient or under illumination. Over-exposure and under-exposure are undesirable in authentication applications since an over-exposed or an under-exposed image means distortion and/or loss of important details during the image capturing process.

The processor is to set the visual guide on the display to provide guidance or assistance to a user to capture an image of a target authentication device having a sufficient data quantity and a sufficient quality of fidelity. In an example, the processor is to set the illumination alignment device and the image alignment device on the display screen upon activation of an authentication process. In an example, the illumination alignment device and the image alignment device are combined as a single visual alignment device and the processor is to set the visual alignment device to be shown on a portion of the display to guide user. The processor is to operate the image capturing device and the light emitting device to capture an image of the authentication device when confirmed by a user that an image of the target authentication device appearing on the display screen is aligned with the visual alignment device. In an example, an authentication verification process may be resident on the apparatus to perform verification of authenticity of a target authentication device with reference to a set of pre-stored parameters such as an image of a reference authentication device stored on the apparatus. In another example, the authentication process may output the captured image of a target authentication device for external or remote verification.

The memory is for storing an authentication operation process, such as an authentication image capturing scheme and/or an authentication verification scheme for execution by the processor. The antenna is optional and is present when the apparatus is equipped with telecommunications functionality, such as a mobile phone.

Operation of an example authentication apparatus comprising a smart phone depicted in Figures 1A and 1B which is installed with an authentication process to operate as an authentication apparatus will be described. An iPhone^{™} such as an iPhone^{™}, iPhone 4^{™}, iPhone 4S^{™}, iPhone 5^{™} of the Apple Inc., or a Galaxy^{™} smart phone of Samsung inc., are examples of smart phones that can be used.

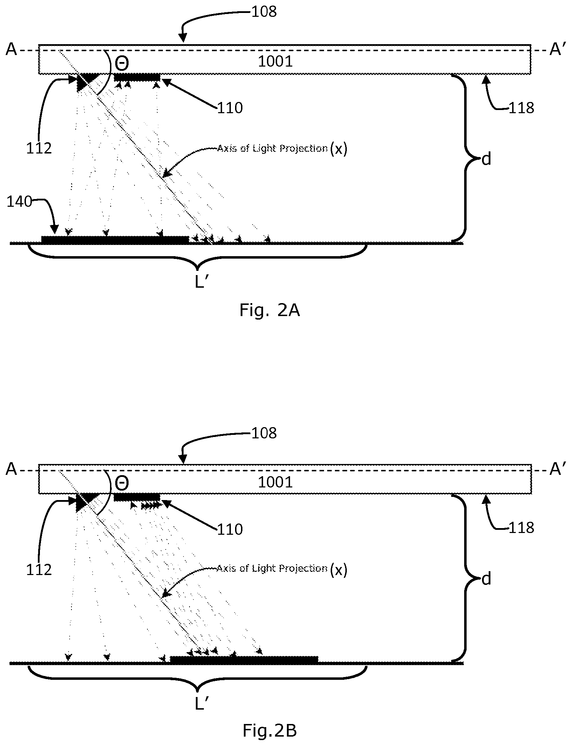

The example authentication apparatus **1001** of Figures 1A and 1B comprises a processor **102,** an antenna **104,** a memory **106,** a display screen **108,** an image capturing device **110,** a light emitting device **112** and a visual guide **114** of the type described above. An authentication process is stored in the memory of the authentication apparatus. The authentication apparatus **1001** includes a rigid and elongate housing **118** of hard plastics which extends along a longitudinal direction that is parallel to a longitudinal axis **A-A'** as depicted in Figures 2A and 2B. The image capturing device **110** and the light emitting device **112** are on different major sides of the housing **118.** Specifically, the image capturing device **110** and the light emitting device **112** are on the back side of the housing **118** while the display screen **108** is on the front side of the housing **118.** When an image of an object is captured during authentication operation, the housing **118** is between the object and its image on display.

The light emitting device **112** is arranged to project light towards a longitudinal end of the housing which is distal from the light emitting device **112.** As depicted in Figures 2A and 2B, the axis of light projection **X** of light emitting device **112** is at an acute angle **θ** to the longitudinal axis **A-A'.** The image capturing device **110** and the display screen **108** are such that when an object having a planar surface of length **L'** is placed with its planar surface parallel to and at a distance **d** from the longitudinal axis **A-A',** a corresponding image of the object will just occupy the entire length **L** of the display screen **108,** and the image on display is geometrically proportional or substantially proportional to the planar surface.

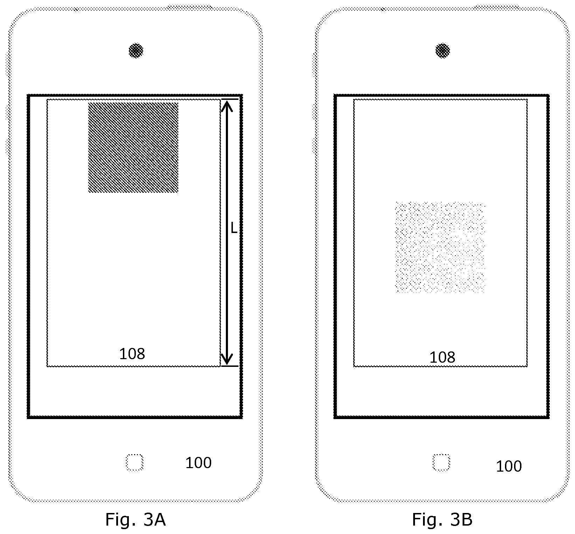

In this example, the visual guide **114** is devised such that when the visual alignment device of the visual guide appearing on the display screen is shown to be in alignment with a corresponding alignment means on the target authentication device **140,** the target authentication device **140** to be authenticated will be at the location as depicted in Figure 2A relative to apparatus, the planar surface to be authenticated will be at a distance **d** from the axis **A-A',** and the image will appear on the portion of the display screen as shown in Figure 3A. On the other hand, when the relative position between the target authentication device **140** and the apparatus **1001** is changed such that the target authentication device **140** is relatively closer to the distal longitudinal end of the apparatus while maintaining an image of the same or similar size as depicted in Figure 2B, the image will appear on the portion of the display screen which is closer to the distal longitudinal end as shown in Figure 3B.

When the authentication process is activated by a user, for example, by activating a touch-screen icon, the authentication process will be activated and the visual guide **114** will be displayed on the display screen **108** as depicted in Figure 1A to inform a user that the apparatus is now ready and available to operate as an authentication apparatus to verify the authenticity of a target authentication device **140.**

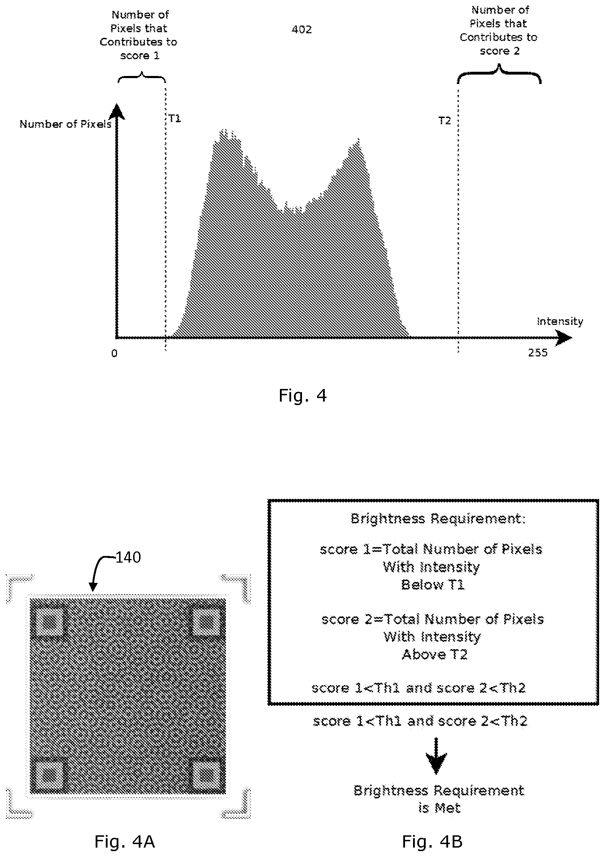

Upon activation, the processor will generate an alignment device which is to appear on a portion of the display screen to guide a user to aim the apparatus at a target authentication device as depicted in Figure 1A. A user will activate the authentication apparatus to capture an image of the authentication device for authentication applications when the alignment device on the display screen is aligned with an alignment device on the target authentication device. The image captured by this process is shown in Figure 4A and has an acceptable brightness level distribution as depicted in Figure 4 according to the criterion of Figure 4B.

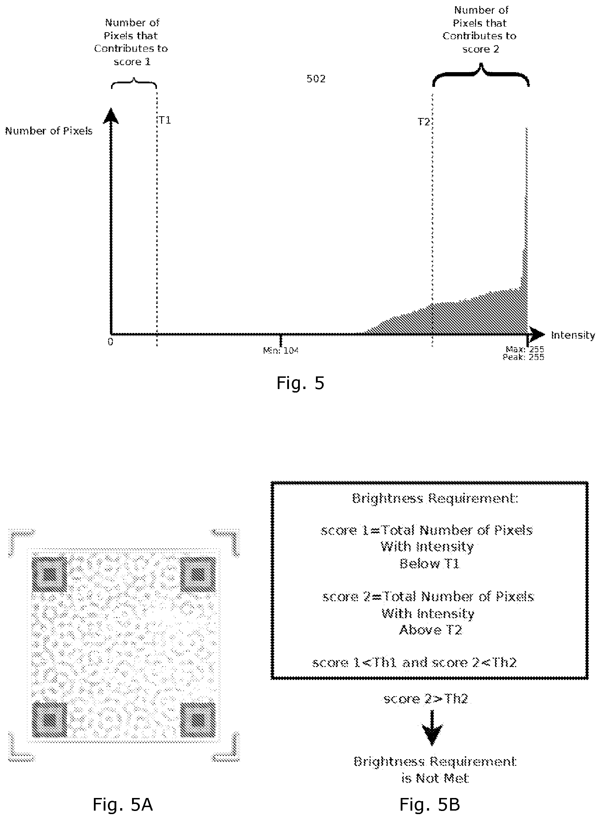

Where an image is captured with the target authentication device out of a region defined by the visual alignment device while maintaining the same image size (or content) on the display screen, an image having a different pixel brightness distribution to that of Figure 4 will result. For example, when the target authentication device is shifted towards the axis of light projection **X** of the light emitting device while maintaining the same image size of the target authentication device, an over-exposed image as shown in Figure 5A having a pixel brightness distribution as depicted in Figure 5 which is not acceptable according to the criterion of Figure 5B will result. The over-exposed image is resulted since a substantial portion of the target authentication device intercepts with the axis of light projection of the light emitting device.

An example calibration scheme to calibrate a reference authentication apparatus to devise a visual guide will be described below. The calibration result will be applied for use on other authentication apparatus having the same or compatible image capturing specifications. Apparatus of the same image capturing specifications in the present context means that the apparatus have the same or equivalent light emitting device and the same or equivalent image capturing device arranged in the same inter-relationship.

In order to facilitate capturing of an image of the reference authentication device having sufficient image data to facilitate authentication of other target authentication devices, a visual alignment device as an example of a visual guide depicted in Figure 1A is set on the display of the reference authentication apparatus for user guidance. The visual alignment device is devised to assist a user to collect an image having a sufficient quantity of image data from a target authentication device to facilitate verification of authentication and comprises alignment means. The example alignment means comprises alignment markers which are distributed at corners of the visual alignment device. The alignment markers are arranged such that when the alignment markers are visually aligned with corresponding alignment markers on the reference authentication device, the image to be collected will contain a sufficient quantity of image data to facilitate verification of authenticity.

The example reference target authentication device of Figure 4A has an overall dimension of 15mm x 15mm (width x length) of which only a 9mm x 9mm portion at the centre defines the digitally coded security features. This 9mm x 9mm portion can be fully and accurately represented by digital coding of 100 pixels x 100 pixels. This quantity of pixel provides a sufficient quantity of image data to facilitate meaningful authentication applications with reference to an image of a sufficient resolution level. Therefore, the visual alignment device is devised to capture 300 pixels x 300 pixels as an example. When the visual alignment device is shown on the display as being aligned with a corresponding alignment device on the example reference authentication device, the entire 15mm x 15mm of the reference authentication device will be captured and stored as 300 pixels x 300 pixels available for verification, although only the 100 pixels x 100 pixels corresponding to the central portion of the captured image contain the critical data needed for authentication.

In addition to having a sufficient quantity of image data, the fidelity of the captured image data is also important so that a meaningful authentication can be performed with respect to the captured image. In order that the captured image truly represents the target authentication device, the image alignment device is moved to different locations on the display to correspond to different illumination conditions by the light emitting device. It is noted that when the brightness level of the captured image of the reference target authentication device are distributed between the upper and lower brightness thresholds, the fidelity of the image is acceptable for authentication. On the other hand, when the brightness level of the captured image of the reference target authentication device falls outside the upper brightness threshold or the lower brightness threshold, the fidelity of the image is not acceptable for authentication.

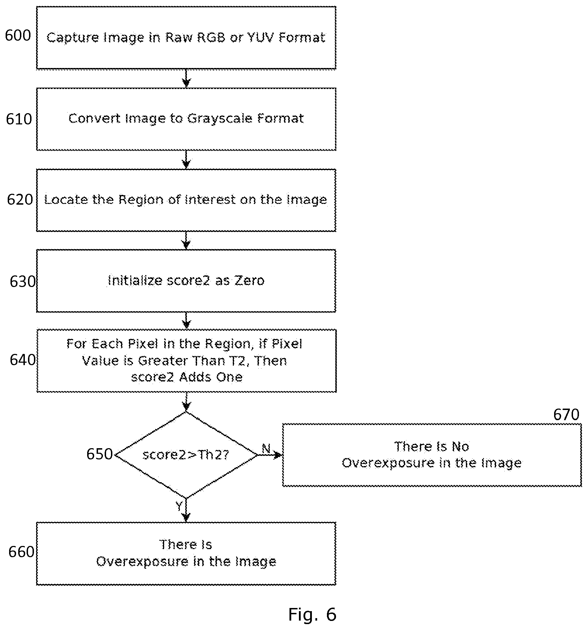

Figure 6 depicts an example flow chart to determine whether a captured image satisfied the pixel brightness requirements with respect to the upper brightness threshold T2. At step 600, an image of the reference target authentication device is captured in raw RGB or YUV format. At step 610, the image data is converted into pixel data in greyscale (or grayscale) format. At step 620, the greyscale data corresponding to a region of the captured image which is of importance to facilitate authenticity verification is selected to analyze whether the requirements on the upper brightness threshold T2 are met. At step 630, a score (score2) representing the number of pixels having a brightness or intensity exceeding the upper brightness threshold T2 is initialized to zero. At step 640, the number of pixels having a brightness or intensity exceeding the upper brightness threshold T2 is counted. The total number of pixels having a brightness or intensity exceeding the upper brightness threshold T2 is calculated and a decision is to be made at step 650. If the total number of pixels having a brightness or intensity level exceeding the upper brightness threshold T2 is above a threshold count Th2, there is an over-exposure problem with the captured image and the image (and hence the location of the reference target authentication device relative to the apparatus) is not acceptable as the quality of fidelity would not be acceptable to perform a meaningful authentication verification process. On the other hand, if the total number of pixels having a brightness or intensity level exceeding the upper brightness threshold T2 does not exceed the threshold count Th2, there is no over-exposure problem with the captured image and the image (and hence the location of the reference target authentication device relative to the apparatus) is acceptable as the quality of fidelity would be acceptable to perform a meaningful authentication verification process.

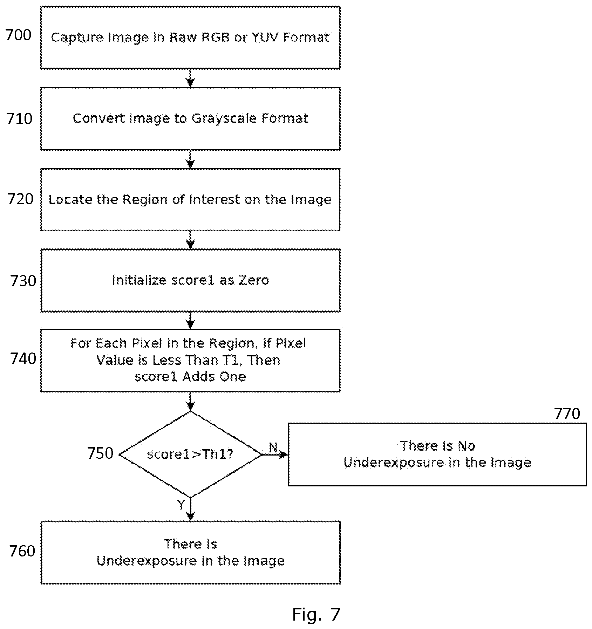

Figure 7 depicts an example flow chart to determine whether a captured image satisfied the pixel brightness requirements with respect to the lower brightness threshold T1. At step 700, an image of the reference target authentication device is captured in raw RGB or YUV format. At step 710, the image data are converted into pixel data in greyscale (or grayscale) format. At step 720, the greyscale data corresponding to a region of the captured image which is of importance to facilitate authenticity verification are selected to analyze whether the requirements on the lower brightness threshold T1 are met. At step 730, a score (score2) representing the number of pixels having a brightness or intensity falling below the lower brightness threshold T1 is initialized to zero. At step 740, the number of pixels having a brightness or intensity below the lower brightness threshold T1 is counted. The total number of pixels having a brightness or intensity below the lower brightness threshold T1 is calculated and a decision is to be made at step 750. If the total number of pixels having a brightness or intensity level below the lower brightness threshold T1 is above a threshold count Th1, there is an under-exposure problem with the captured image and the image (and hence the location of the reference target authentication device relative to the apparatus) is not acceptable as the quality of fidelity would not be acceptable to perform a meaningful authentication verification process. On the other hand, if the total number of pixels having a brightness or intensity level below the lower brightness threshold T1 does not exceed the threshold count Th1, there is no under-exposure problem with the captured image and the image (and hence the location of the reference target authentication device relative to the apparatus) is acceptable as the quality of fidelity would be acceptable to perform a meaningful authentication verification process.

For example, an image of the reference authentication device as shown in Figure 5A was taken with the visual guide corresponding to the reference authentication device at the location shown in Figure 3B. The image is very pale or whitened because it contains image data which are above an upper brightness threshold T2 and the data fidelity is not acceptable. On the other hand, the image of the reference authentication device as shown in Figure 4A was taken with the visual guide corresponding to the reference authentication device at the location shown in Figure 3A. This image has all the image data within a brightness range which is a range between a lower threshold brightness level T1 and an upper brightness threshold T2. All the data within this brightness range has a data fidelity which is acceptable for authentication applications.

After evaluating several images of the reference authentication device, the location of a visual alignment device corresponding to a captured image meeting the aforesaid brightness range requirements will be selected and set as the visual alignment device of the reference authentication apparatus to complete calibration.

In an example, instead of evaluating the distribution of pixel brightness levels on a captured image, the data fidelity of the captured image can be evaluated by decoding the captured image to recover the digital coding embedded in the captured image and comparing the data with that of the reference target authentication device. A visual guide which generates an image having an acceptable data fidelity level will then be selected and set as the visual alignment device of the authentication device to complete calibration.

In another example, an extended sample authentication device having the same content as that of the reference authentication device of Figure 4A but extended to cover the entire range of the image capturing device may be used to calibrate and set a visual guide. An image of the extended sample authentication device is captured and the data fidelity of the digitally coded data is examined to select a region having acceptable data fidelity to be set as a location of the visual guide to complete calibration.

After calibration has completed and the visual guide devised, the visual guide can be included as part of an authentication process for guiding a user to capture an image of a target authentication device for verification of authenticity. The verification can be done internally by the apparatus or externally by another authentication apparatus without loss of generality.

In an example, the calibration data are used to devise a visual guide on an authentication apparatus, such as an authentication apparatus of Figure 1A, upon execution of an authentication process. The authentication process may be made available as an application software for a smart phone for which calibration has been done to set a visual guide such that upon installation and activation, the smart phone or compatible apparatus will operate as an authentication apparatus.

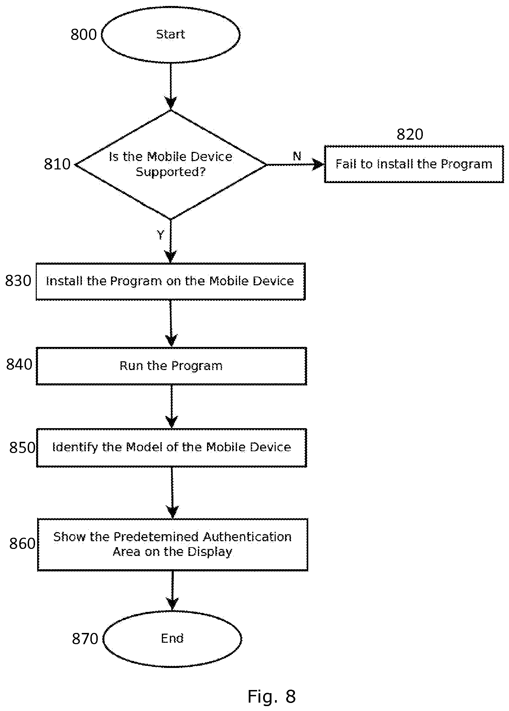

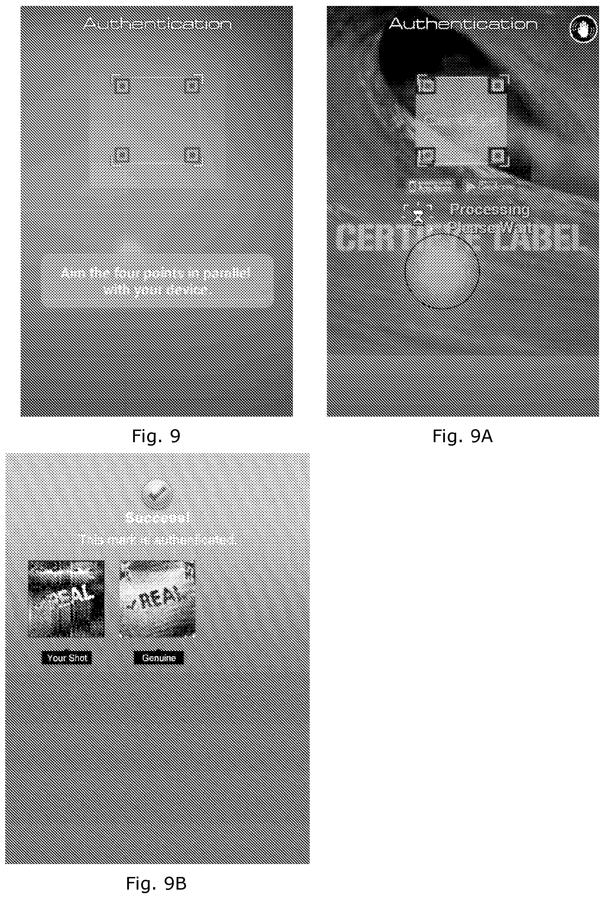

As depicted in Figure 8, a user may access the Internet to look for an authentication application software designated for a specific model of smart phone. If there is an application software available for the specific smart phone, the application software will be downloaded and installed on the smart phone. Upon execution of the application software for authentication of a target authentication device, the model identification of the smart phone will be confirmed and the visual guide will appear on the display to run the authentication process as depicted in Figures 9 to 9B.

When the visual guide appears on the display, a text message on the display will guide the user to align the visual guide with a corresponding alignment device on the target authentication device. A user will then aim the authentication apparatus so that the image capturing device is ready to capture an image of the target authentication device shown on the display. The processor will then operate the image capturing device to capture and store an image of the target authentication device upon receipt of a confirmation signal given by the user. The apparatus can then perform verification using an internal or built-in verification algorithm or make the captured image available for external verification.

Figure 8 depicts an example flow chart illustrating steps whereby a mobile phone is to operate as an authentication apparatus upon execution of an authentication process. The process starts at step 800 when a user looks for an authentication process in the form of application software that is adapted for use for a specific type of device. A decision will be made at step 810. If there is no applicable software application, the process at step 820 will terminate and the mobile device cannot operate as an authentication apparatus for in respect of a target authentication device. On the other hand, if there is an applicable software application available, the process at step 830 will obtain the software and install on the mobile device. At step 840, the mobile device after having installed the application software will execute the software and run the authentication process defined by the application software. Where the software application is suitable for more than one mobile device, the process at step 850 will identify the model of the mobile device. On execution of the authentication process at step 860, the processor will devise a visual guide on the display to guide a user to operate the authentication apparatus and an image of a target authentication device will be captured by the authentication apparatus upon receipt of instructions given by a user. The visual guide may also include text messages as shown in Figures 9 to 9B. The process ends at step 870 after an image of the target authentication device has been captured and corresponding verification process completed.

While the authentication methods and apparatus have been described with reference to the above examples and embodiments, it should be appreciated that the examples and embodiments are only to assist understanding and shall not be used to limit the scope of disclosure. For example, while the example authentication processes have been illustrated with reference to operation on a smart phone, it should be appreciated that other portable or mobile electronic devices such as tablet computers or dedicated verification apparatus can be used without loss of generality. As another example, the display may be built-in on the authentication apparatus or can be an external display.

## Claims

1. An authentication apparatus (1001) for verifying authenticity of a target authentication device (140) having digitally encoded security patterns, the authentication apparatus (1001) comprising:
an image capturing device (110),
a built-in light emitting device (112) for providing supplemental illumination to illuminate an object to be captured by the image capturing device (110) when the ambient light is insufficient,
a visual guide (114) to guide a user to aim the authentication apparatus (1001) at the target authentication device (140), and
a processor (102);
wherein the visual guide (114) is devised such that, when the authentication apparatus (1001) aims at a target authentication device (140) following guidance of the visual guide (114) on execution of an authentication process,
- the brightness levels of an image of the target authentication device (140) captured by the image capturing device (110) under operational illumination of the light emitting device (112) are within a predetermined range of brightness levels to facilitate verification of authenticity, and
- the content and quality of fidelity of the image of the target authentication device (140) captured by the image capturing device (110) under operational illumination of the light emitting device (112) are sufficient to facilitate verification of authenticity of the target authentication device (140); and
wherein the visual guide (114) has been devised by calibrating a reference authentication apparatus, the reference authentication apparatus being calibrated by:
- capturing an image of a reference authentication device under operational illumination of the light emitting device (112)
- evaluating the image of the reference authentication device by determining whether a brightness level of the captured image is between an upper brightness threshold and a lower brightness threshold, and
- setting a location of the visual guide (114), wherein the location of the visual guide (114) corresponds to the location of the reference authentication device in a captured image in which the brightness level of the image is between the upper brightness threshold and the lower brightness threshold; or
- capturing an image of a sample reference device under operational illumination of the light emitting device (112), the sample reference device having a reference authentication device which is extended to cover the entire range of the image capturing device (110),
- selecting a region of the image having acceptable data fidelity, wherein the fidelity is acceptable when the brightness level of the captured image is between an upper brightness threshold and a lower brightness threshold, and
- setting a location of the visual guide (114), wherein the location of the visual guide (114) corresponds to a region of the sample reference device in which the fidelity of the image is acceptable for authentication; and
wherein the upper brightness threshold corresponds to a level of maximum brightness at which the captured image of the target authentication device (140) is useable to facilitate verification of authenticity;
wherein the upper brightness threshold is a brightness level below brightness saturation, brightness saturation being a phenomenon such that an increase in illumination brightness level at the target authentication device (140) does not bring about an increase in grey scale or brightness level at the captured image.

2. An authentication apparatus (1001) according to Claim 1, wherein the range of predetermined brightness levels is a range within which the quality and/or resolution of the captured image of the target authentication device (140) is sufficient to facilitate verification of authenticity.

3. An authentication apparatus (1001) according to Claim 1, wherein the lower brightness threshold corresponds to a level of minimum brightness at which the captured image of the target authentication device (140) is useable to facilitate verification of authenticity.

4. An authentication apparatus (1001) according to any of the preceding Claims, wherein the processor (102) is to process the captured image and to verify authenticity of the target authentication device (140); and/or to process the captured image to generate a visible representation of security features embedded in the target authentication device (140) for a user to verify authenticity of the target authentication device (140), and/or wherein the authentication apparatus (1001) includes an associated display device (108) and the processor (102) is to generate the visual guide (114) on the associated display device (108), and/or wherein the authentication apparatus (1001) includes a projector and the processor (102) is to generate the visual guide (114) for projection by the projector.

5. An authentication apparatus (1001) according to any preceding Claims, wherein the visual guide (114) includes an alignment device for aligning with a corresponding alignment device on the target authentication device (140), the visual guide (114) and the light emitting device (112) being arranged such that an axis of light projection (X) corresponding to a line of the brightest illumination by the light emitting device falls outside security features of the target authentication device (140) during image capture operations when the authentication apparatus (1001) is aimed at the target authentication device (140) following guidance of the visual guide (114) such that the alignment device of the visual guide (114) and the corresponding alignment device on the target authentication device (140) are aligned.

6. An authentication apparatus (1001) according to any of the preceding Claims, wherein the target authentication device (140) comprises an embedded security device having hidden security features, and the processor (102) is to process the captured image of the target authentication device (140) to extract the security features for display.

7. An authentication apparatus (1001) according to any of the preceding Claims, wherein the authentication apparatus (1001) includes a memory (106) to store characteristics of a reference authentication device and the processor (102) is to verify authenticity of the target authentication device (140) with reference to the captured image of the target authentication device (140); and/or wherein the processor (102) is to generate the visual guide (114) upon activation of an authentication process by a user, the authentication process being resident on the authentication apparatus (1001).

8. An authentication apparatus (1001) according to any of the preceding Claims, wherein the processor (102) is to generate the visual guide (114) according to a pre-stored authentication process, the authentication process being apparatus specific and is downloadable through Internet or other telecommunications channels.

9. An authentication apparatus (1001) according to any of the preceding Claims, wherein the processor (102) is to access the authentication process located on a remote computing server to facilitate verification.

10. An authentication apparatus (1001) according to any of the preceding Claims, wherein the authentication apparatus (1001) is a mobile device such as a mobile telecommunications device, such as a mobile phone, a smart phone, a tablet computer, or a computer with telecommunications capability, loadable with an authentication process to verify authenticity of the target authentication device (140).

11. An authentication image capturing method for use with an authentication apparatus (1001) according to claim 1 for verifying an authenticity of a target authentication device (140) having digitally encoded security patterns,
wherein the authentication apparatus (1001) comprises: an image capturing device (110), a built-in light emitting device (112) to project light for illuminating an object to be captured by the image capturing device (110), and a processor (102);
wherein the method includes calibrating a reference authentication apparatus to devise a visual guide (114), the authentication apparatus (1001) and the reference authentication apparatus having the same or equivalent light emitting device (112) and the same or equivalent image capturing device (110) arranged in the same inter-relationship; and
wherein the method includes using the authentication apparatus (1001) to generate the visual guide (114) for guiding a user to aim the authentication apparatus (1001) at the target authentication device (140) on execution of an authentication process such that, when the authentication apparatus (1001) is aimed at the target authentication device (140) following guidance of the visual guide (114) to capture an image of the target authentication device (140) and under operational illumination of the light emitting device (112) during use,
- the brightness levels of the image are within a predetermined range of brightness levels to facilitate verification of authenticity, and
- the content and quality of fidelity of the captured image is sufficient to facilitate verification of authenticity of the target authentication device (140), and
wherein calibrating the reference authentication apparatus comprises:
- capturing an image of a reference authentication device under operational illumination of the light emitting device (112),
- evaluating the image of the reference authentication device by determining whether a brightness level of the captured image is between an upper brightness threshold and a lower brightness threshold, and
- setting a location of the visual guide (114), wherein the location of the visual guide (114) corresponds to the location of the reference authentication device in a captured image in which the brightness level of the image is between the upper brightness threshold and the lower brightness threshold; or
- capturing an image of a sample reference device under operational illumination of the light emitting device (112), the sample reference device having a reference authentication device which is extended to cover the entire range of the image capturing device (110),
- selecting a region of the image having acceptable data fidelity, wherein the fidelity is acceptable when the brightness level of the captured image is between an upper brightness threshold and a lower brightness threshold, and
- setting a location of the visual guide (114), wherein the location of the visual guide (114) corresponds to a region of the sample reference device in which the fidelity of the image is acceptable for authentication; and
wherein the upper brightness threshold corresponds to a level of maximum brightness at which the captured image of the target authentication device is useable to facilitate verification of authenticity;
wherein the upper brightness threshold is a brightness level below brightness saturation, brightness saturation being a phenomenon such that an increase in illumination brightness level at the target authentication device (140) does not bring about an increase in grey scale or brightness level at the captured image.

12. An authentication image capturing method according to claim 11, wherein determining whether the brightness level of the image is between the upper brightness threshold and the lower brightness threshold comprises:
calculating a total number of pixels having a brightness exceeding the upper brightness threshold and calculating a total number of pixels having a brightness below the lower brightness threshold,
wherein the brightness level of the image is above the upper brightness threshold if the total number of pixels having a brightness exceeding the upper brightness threshold is above a threshold count, and
wherein the brightness level of the image is below the lower brightness threshold if the total number of pixels having a brightness falling below the lower brightness threshold is above a threshold count.

13. An authentication image capturing method according to Claim 11 or 12, wherein the method is in the form of a downloadable software application for running on an authentication apparatus (1001) comprising a processor (102), and the downloadable application is apparatus specific such that a specific application is to be downloaded for a specific apparatus with reference to the model number of the authentication apparatus (1001) to run the authentication method.

14. An authentication image capturing method according to Claims 11, 12 or 13, wherein the method includes identifying a display portion of a display (108) associated with the authentication apparatus (1001), the display portion being such that an image of the target authentication device (140) corresponding to an image appearing on that display portion when captured such that the brightness levels on the captured image are within the predetermined range of brightness levels will provide sufficient data to facilitate verification of authentication; aiming the authentication apparatus (1001) at a sample target authentication device such that an image of the target authentication device will appear on a portion of a display (108), capturing an image of the sample target authentication device while under illumination of the light emitting device (112), analyzing brightness levels on the captured image, devising the visual guide (114) on that display portion when the brightness levels on the captured image are within the predetermined range of brightness levels; and wherein the predetermined range of brightness levels is a range within which brightness levels of all the pixels of the captured image are neither over-exposed nor under-exposed.

15. An authentication image capturing method according to Claim 14, wherein the method includes, selecting a relative location where the captured image has a more even distribution of pixel intensity as the location to set the visual guide (114) where there is more than one location which gives a correct authentication result.

## Patentansprüche

1. Authentifizierungsgerät (1001) zum Verifizieren der Authentizität einer Zielauthentifizierungsvorrichtung (140) mit digital kodierten Sicherheitsmustern, wobei das Authentifizierungsgerät (1001) aufweist:
eine Bildaufnahmevorrichtung (110),
eine eingebaute lichtemittierende Vorrichtung (112) zum Bereitstellen von zusätzlicher Beleuchtung, um ein von der Bildaufnahmevorrichtung (110) aufzunehmendes Objekt zu beleuchten, wenn das Umgebungslicht unzureichend ist,
eine visuelle Anleitung (114), um einen Benutzer anzuleiten, das Authentifizierungsgerät (1001) auf die Zielauthentifizierungsvorrichtung (140) zu richten, und
einen Prozessor (102);
wobei die visuelle Anleitung (114) derart gestaltet ist, dass, wenn das Authentifizierungsgerät (1001) gemäß der Anleitung der visuellen Anleitung (114) bei der Ausführung eines Authentifizierungsprozesses auf eine Zielauthentifizierungsvorrichtung (140) gerichtet wird,
- die Helligkeitsniveaus eines Bildes der Zielauthentifizierungsvorrichtung (140), das von der Bildaufnahmevorrichtung (110) bei der Betriebsbeleuchtung der lichtemittierenden Vorrichtung (112) aufgenommen wird, innerhalb eines vorbestimmten Bereichs von Helligkeitsniveaus liegen, um die Überprüfung der Authentizität zu erleichtern, und
- der Inhalt und die Qualität der Abbildungstreue des Bildes der Zielauthentifizierungsvorrichtung (140), das von der Bildaufnahmevorrichtung (110) bei der Betriebsbeleuchtung der lichtemittierenden Vorrichtung (112) aufgenommen wurde, ausreichend sind, um die Überprüfung der Authentizität der Zielauthentifizierungsvorrichtung (140) zu erleichtern; und
wobei die visuelle Anleitung (114) durch Kalibrieren einer Referenzauthentifizierungsvorrichtung gestaltet wird, wobei die Referenzauthentifizierungsvorrichtung kalibriert wird durch:
- Aufnehmen eines Bildes einer Referenzauthentifizierungsvorrichtung bei der Betriebsbeleuchtung der lichtemittierenden Vorrichtung (112)
- Auswerten des Bildes der Referenzauthentifizierungsvorrichtung durch Bestimmen, ob ein Helligkeitsniveau des aufgenommenen Bildes zwischen einem oberen Helligkeitsschwellenwert und einem unteren Helligkeitsschwellenwert liegt, und
- Einstellen einer Position der visuellen Anleitung (114), wobei die Position der visuellen Anleitung (114) der Position der Referenzauthentifizierungsvorrichtung in einem aufgenommenen Bild entspricht, in dem das Helligkeitsniveau des Bildes zwischen dem oberen Helligkeitsschwellenwert und dem unteren Helligkeitsschwellenwert liegt;
oder
- Aufnehmen eines Bildes einer Probenreferenzvorrichtung bei der Betriebsbeleuchtung der lichtemittierenden Vorrichtung (112), wobei die Probenreferenzvorrichtung eine Referenzauthentifizierungsvorrichtung aufweist, die sich so erstreckt, dass sie den gesamten Bereich der Bildaufnahmevorrichtung (110) abdeckt,
- Auswählen eines Bereichs des Bildes mit akzeptabler Datentreue, wobei die Datentreue akzeptabel ist, wenn das Helligkeitsniveau des aufgenommenen Bildes zwischen einem oberen Helligkeitsschwellenwert und einem unteren Helligkeitsschwellenwert liegt, und
- Einstellen einer Position der visuellen Anleitung (114), wobei die Position der visuellen Anleitung (114) einem Bereich der Probenreferenzvorrichtung entspricht, in dem die Abbildungstreue für die Authentifizierung akzeptabel ist; und
wobei der obere Helligkeitsschwellenwert einem maximalen Helligkeitsniveau entspricht, bei dem das aufgenommene Bild der Zielauthentifizierungsvorrichtung (140) verwendet werden kann, um die Überprüfung der Authentizität zu erleichtern;
wobei der obere Helligkeitsschwellenwert ein Helligkeitsniveau unterhalb der Helligkeitssättigung ist, wobei die Helligkeitssättigung ein Phänomen ist, bei dem eine Erhöhung des Beleuchtungshelligkeitsniveaus an der Zielauthentifizierungsvorrichtung (140) nicht zu einer Erhöhung der Graustufe oder des Helligkeitsniveaus des aufgenommenen Bildes führt.

2. Authentifizierungsgerät (1001) nach Anspruch 1, wobei der Bereich vorbestimmter Helligkeitsniveaus ein Bereich ist, innerhalb dessen die Qualität und/oder die Auflösung des aufgenommenen Bildes der Zielauthentifizierungsvorrichtung (140) ausreichend ist, um die Überprüfung der Authentizität zu erleichtern.

3. Authentifizierungsgerät (1001) nach Anspruch 1, wobei der untere Helligkeitsschwellenwert einem Mindesthelligkeitsniveau entspricht, bei dem das aufgenommene Bild der Zielauthentifizierungsvorrichtung (140) verwendet werden kann, um die Überprüfung der Authentizität zu erleichtern.

4. Authentifizierungsgerät (1001) nach einem der vorhergehenden Ansprüche, wobei der Prozessor (102) dazu dient, das aufgenommene Bild zu verarbeiten und die Authentizität der Zielauthentifizierungsvorrichtung (140) zu überprüfen; und/oder das aufgenommene Bild zu verarbeiten, um eine sichtbare Darstellung von Sicherheitsmerkmalen zu erzeugen, die in der Zielauthentifizierungsvorrichtung (140) eingebettet sind, damit ein Benutzer die Authentizität der Zielauthentifizierungsvorrichtung (140) überprüfen kann, und/oder wobei das Authentifizierungsgerät (1001) eine zugeordnete Anzeigevorrichtung (108) aufweist und der Prozessor (102) dazu dient, die visuelle Anleitung (114) auf der zugeordneten Anzeigevorrichtung (108) zu erzeugen, und/oder wobei das Authentifizierungsgerät (1001) einen Projektor aufweist und der Prozessor (102) dazu dient, die visuelle Anleitung (114) zur Projektion durch den Projektor zu erzeugen.

5. Authentifizierungsgerät (1001) nach einem der vorhergehenden Ansprüche, wobei die visuelle Anleitung (114) eine Ausrichtungsvorrichtung zum Ausrichten mit einer entsprechenden Ausrichtungsvorrichtung an der Zielauthentifizierungsvorrichtung (140) aufweist, wobei die visuelle Anleitung (114) und die lichtemittierende Vorrichtung (112) derart angeordnet sind, dass eine Achse der Lichtprojektion (X), die einer Linie der hellsten Beleuchtung durch die lichtemittierende Vorrichtung entspricht, während der Bildaufnahmevorgänge außerhalb von Sicherheitsmerkmalen der Zielauthentifizierungsvorrichtung (140) liegt, wenn das Authentifizierungsgerät (1001) gemäß der Anleitung der visuellen Anleitung (114) so auf die Zielauthentifizierungsvorrichtung (140) gerichtet wird, dass die Ausrichtungsvorrichtung der visuellen Anleitung (114) und die entsprechende Ausrichtungsvorrichtung an der Zielauthentifizierungsvorrichtung (140) in Ausrichtung sind.

6. Authentifizierungsgerät (1001) nach einem der vorhergehenden Ansprüche, wobei die Zielauthentifizierungsvorrichtung (140) eine eingebettete Sicherheitsvorrichtung mit verborgenen Sicherheitsmerkmalen aufweist und der Prozessor (102) dazu dient, das aufgenommene Bild der Zielauthentifizierungsvorrichtung (140) zu verarbeiten, um die Sicherheitsmerkmale zum Anzeigen zu extrahieren.

7. Authentifizierungsgerät (1001) nach einem der vorhergehenden Ansprüche, wobei das Authentifizierungsgerät (1001) einen Speicher (106) zum Speichern von Eigenschaften einer Referenzauthentifizierungsvorrichtung aufweist und der Prozessor (102) dazu dient, die Authentizität der Zielauthentifizierungsvorrichtung (140) unter Bezugnahme auf das aufgenommene Bild der Zielauthentifizierungsvorrichtung (140) zu verifizieren; und/oder wobei der Prozessor (102) dazu dient, die visuelle Anleitung (114) beim Aktivieren eines Authentifizierungsprozesses durch einen Benutzer zu erzeugen, wobei der Authentifizierungsprozess auf dem Authentifizierungsgerät (1001) resident ist.

8. Authentifizierungsgerät (1001) nach einem der vorhergehenden Ansprüche, wobei der Prozessor (102) dazu dient, die visuelle Anleitung (114) gemäß einem vorgespeicherten Authentifizierungsprozess zu erzeugen, wobei der Authentifizierungsprozess gerätespezifisch ist und über das Internet oder andere Telekommunikationskanäle heruntergeladen werden kann.

9. Authentifizierungsgerät (1001) nach einem der vorhergehenden Ansprüche, wobei der Prozessor (102) dazu dient, auf den Authentifizierungsprozess zuzugreifen, der sich auf einem entfernten Computerserver befindet, um die Überprüfung zu erleichtern.

10. Authentifizierungsgerät (1001) nach einem der vorhergehenden Ansprüche, wobei das Authentifizierungsgerät (1001) ein mobiles Gerät ist wie etwa ein mobiles Telekommunikationsgerät, zum Beispiel ein Mobiltelefon, ein Smartphone, ein Tablet-Computer oder ein Computer mit Telekommunikationsfähigkeit, auf das ein Authentifizierungsprozess geladen werden kann, um die Authentizität des Zielauthentifizierungsgeräts (140) zu überprüfen.

11. Authentifizierungsbildaufnahmeverfahren zur Verwendung mit einem Authentifizierungsgerät (1001) nach Anspruch 1 zur Überprüfung der Authentizität einer Zielauthentifizierungsvorrichtung (140) mit digital kodierten Sicherheitsmustern,
wobei das Authentifizierungsgerät (1001) aufweist: eine Bildaufnahmevorrichtung (110), eine eingebaute lichtemittierende Vorrichtung (112) zum Projizieren von Licht zum Beleuchten eines von der Bildaufnahmevorrichtung (110) aufzunehmenden Objekts, und einen Prozessor (102);
wobei das Verfahren das Kalibrieren eines Referenzauthentifizierungsgeräts aufweist, um eine visuelle Anleitung (114) zu gestalten, wobei das Authentifizierungsgerät (1001) und das Referenzauthentifizierungsgerät die gleiche oder eine äquivalente lichtemittierende Vorrichtung (112) und die gleiche oder eine äquivalente Bildaufnahmevorrichtung (110) aufweisen, die in der gleichen Beziehung zueinander angeordnet sind; und
wobei das Verfahren die Verwendung des Authentifizierungsgeräts (1001) aufweist, um die visuelle Anleitung (114) zu erzeugen, um einen Benutzer anzuleiten, das Authentifizierungsgerät (1001) bei der Ausführung eines Authentifizierungsprozesses auf die Zielauthentifizierungsvorrichtung (140) zu richten, sodass, wenn das Authentifizierungsgerät (1001) gemäß der Anleitung der visuellen Anleitung (114) auf die Zielauthentifizierungsvorrichtung (140) gerichtet wird, um ein Bild der Zielauthentifizierungsvorrichtung (140) bei der Betriebsbeleuchtung der lichtemittierenden Vorrichtung (112) während der Verwendung aufzunehmen,
- die Helligkeitsniveaus des Bildes innerhalb eines vorgegebenen Bereichs von Helligkeitsniveaus liegen, um die Überprüfung der Authentizität zu erleichtern, und
- der Inhalt und die Qualität der Abbildungstreue des aufgenommenen Bildes ausreichen, um die Überprüfung der Authentizität der Zielauthentifizierungsvorrichtung (140) zu erleichtern, und
wobei das Kalibrieren des Referenzauthentifizierungsgeräts aufweist:
- Aufnehmen eines Bildes einer Referenzauthentifizierungsvorrichtung bei der Betriebsbeleuchtung der lichtemittierenden Vorrichtung (112),
- Auswerten des Bildes der Referenzauthentifizierungsvorrichtung durch Bestimmen, ob ein Helligkeitsniveau des aufgenommenen Bildes zwischen einem oberen Helligkeitsschwellenwert und einem unteren Helligkeitsschwellenwert liegt, und
- Einstellen einer Position der visuellen Anleitung (114), wobei die Position der visuellen Anleitung (114) der Position der Referenzauthentifizierungsvorrichtung in einem aufgenommenen Bild entspricht, bei der das Helligkeitsniveau des Bildes zwischen dem oberen Helligkeitsschwellenwert und dem unteren Helligkeitsschwellenwert liegt;
oder
- Aufnehmen eines Bildes einer Probenreferenzvorrichtung bei der Betriebsbeleuchtung der lichtemittierenden Vorrichtung (112), wobei die Probenreferenzvorrichtung eine Referenzauthentifizierungsvorrichtung aufweist, die sich so erstreckt, dass sie den gesamten Bereich der Bildaufnahmevorrichtung (110) abdeckt,
- Auswählen eines Bereichs des Bildes mit akzeptabler Datentreue, wobei die Datentreue akzeptabel ist, wenn das Helligkeitsniveau des aufgenommenen Bildes zwischen einem oberen Helligkeitsschwellenwert und einem unteren Helligkeitsschwellenwert liegt, und
- Einstellen einer Position der visuellen Anleitung (114), wobei die Position der visuellen Anleitung (114) einem Bereich der Probenreferenzvorrichtung entspricht, in der die Abbildungstreue für die Authentifizierung akzeptabel ist; und
wobei der obere Helligkeitsschwellenwert einem maximalen Helligkeitsniveau entspricht, bei dem das aufgenommene Bild der Zielauthentifizierungsvorrichtung verwendet werden kann, um die Überprüfung der Authentizität zu erleichtern;
wobei der obere Helligkeitsschwellenwert ein Helligkeitsniveau unterhalb der Helligkeitssättigung ist, wobei die Helligkeitssättigung ein Phänomen ist, bei dem eine Erhöhung des Beleuchtungshelligkeitsniveaus an der Zielauthentifizierungsvorrichtung (140) nicht zu einer Erhöhung der Graustufe oder des Helligkeitsniveaus in dem aufgenommenen Bild führt.

12. Authentifizierungsbildaufnahmeverfahren nach Anspruch 11, wobei das Bestimmen, ob das Helligkeitsniveau des Bildes zwischen dem oberen Helligkeitsschwellenwert und dem unteren Helligkeitsschwellenwert liegt, aufweist:
- Berechnen der Gesamtzahl der Pixel mit einer Helligkeit, die über dem Helligkeitsschwellenwert liegt, und Berechnen der Gesamtzahl der Pixel mit einer Helligkeit, die unter dem unteren Helligkeitsschwellenwert liegt,
wobei das Helligkeitsniveau des Bildes über dem oberen Helligkeitsschwellenwert liegt, wenn die Gesamtzahl der Pixel mit einer Helligkeit, die über dem oberen Helligkeitsschwellenwert liegt, über einer Schwellenwertanzahl liegt, und
wobei das Helligkeitsniveau des Bildes unter dem unteren Helligkeitsschwellenwert liegt, wenn die Gesamtzahl der Pixel mit einer Helligkeit, die unter dem unteren Helligkeitsschwellenwert liegt, über einer Schwellenwertanzahl liegt.

13. Authentifizierungsbildaufnahmeverfahren nach Anspruch 11 oder 12, wobei das Verfahren in Form einer herunterladbaren Softwareanwendung zum Ausführen auf einem Authentifizierungsgerät (1001) vorliegt, die einen Prozessor (102) aufweist, und die herunterladbare Anwendung gerätespezifisch ist, sodass eine spezifische Anwendung für ein spezifisches Gerät unter Bezugnahme auf die Modellnummer des Authentifizierungsgeräts (1001) heruntergeladen werden muss, um das Authentifizierungsverfahren auszuführen.

14. Authentifizierungsbildaufnahmeverfahren nach Anspruch 11, 12 oder 13, wobei das Verfahren das Identifizieren eines Anzeigebereichs einer Anzeigevorrichtung (108), die dem Authentifizierungsgerät (1001) zugeordnet ist, aufweist, wobei der Anzeigebereich derart beschaffen ist, dass ein Bild der Zielauthentifizierungsvorrichtung (140), das einem Bild entspricht, das auf diesem Anzeigebereich erscheint, wenn es aufgenommen wird, sodass die Helligkeitsniveaus in dem aufgenommenen Bild innerhalb des vorbestimmten Bereichs von Helligkeitsniveaus liegen, ausreichende Daten bereitstellt, um die Überprüfung der Authentifizierung zu erleichtern; Richten des Authentifizierungsgeräts (1001) auf eine Probezielauthentifizierungsvorrichtung, sodass ein Bild der Zielauthentifizierungsvorrichtung auf einem Bereich einer Anzeigevorrichtung (108) erscheint, Aufnehmen eines Bildes der Probezielauthentifizierungsvorrichtung bei der Beleuchtung der lichtemittierenden Vorrichtung (112), Analysieren der Helligkeitsniveaus in dem aufgenommenen Bild, Gestalten der visuellen Anleitung (114) auf diesem Anzeigebereich, wenn die Helligkeitsniveaus in dem aufgenommenen Bild innerhalb des vorbestimmten Bereichs von Helligkeitsniveaus liegen; und wobei der vorbestimmte Bereich von Helligkeitsniveaus ein Bereich ist, in dem die Helligkeitsniveaus aller Pixel des aufgenommenen Bildes weder überbelichtet noch unterbelichtet sind.

15. Authentifizierungsbildaufnahmeverfahren nach Anspruch 14, wobei das Verfahren das Auswählen einer relativen Position, an der das aufgenommene Bild eine gleichmäßigere Verteilung der Pixelintensität aufweist als die Position zum Einstellen der visuellen Anleitung (114) aufweist, wenn es mehr als eine Position gibt, die ein korrektes Authentifizierungsergebnis liefert.

## Revendications

1. Appareil d'authentification (1001) pour vérifier l'authenticité d'un dispositif d'authentification cible (140) ayant des motifs de sécurité encodés numériquement, l'appareil d'authentification (1001) comprenant :
un dispositif de capture d'image (110),
un dispositif d'émission de lumière (112) intégré pour fournir une illumination supplémentaire afin d'éclairer un objet à capturer par le dispositif de capture d'image (110) lorsque la lumière ambiante est insuffisante,
un guide visuel (114) pour guider un utilisateur afin de pointer l'appareil d'authentification (1001) sur le dispositif d'authentification cible (140), et
un processeur (102) ;
dans lequel le guide visuel (114) est conçu de telle sorte que, lorsque l'appareil d'authentification (1001) pointe sur un dispositif d'authentification cible (140) suivant le guidage du guide visuel (114) lors de l'exécution d'un processus d'authentification,
- les niveaux de luminosité d'une image du dispositif d'authentification cible (140) capturée par le dispositif de capture d'image (110) sous l'illumination opérationnelle du dispositif d'émission de lumière (112) sont dans une plage prédéterminée de niveaux de luminosité pour faciliter la vérification de l'authenticité, et
- le contenu et la qualité de fidélité de l'image du dispositif d'authentification cible (140) capturée par le dispositif de capture d'image (110) sous l'illumination opérationnelle du dispositif d'émission de lumière (112) sont suffisants pour faciliter la vérification de l'authenticité du dispositif d'authentification cible (140) ; et
dans lequel le guide visuel (114) a été conçu en étalonnant un appareil d'authentification de référence, l'appareil d'authentification de référence étant étalonné en :
- capturant une image d'un dispositif d'authentification de référence sous l'illumination opérationnelle du dispositif d'émission de lumière (112)
- évaluant l'image du dispositif d'authentification de référence en déterminant si un niveau de luminosité de l'image capturée est entre un seuil supérieur de luminosité et un seuil inférieur de luminosité, et
- définissant un emplacement du guide visuel (114), dans lequel l'emplacement du guide visuel (114) correspond à l'emplacement du dispositif d'authentification de référence dans une image capturée dans laquelle le niveau de luminosité de l'image est entre le seuil supérieur de luminosité et le seuil inférieur de luminosité ;
ou
- capturant une image d'un dispositif de référence échantillon sous l'illumination opérationnelle du dispositif d'émission de lumière (112), le dispositif de référence échantillon ayant un dispositif d'authentification de référence qui est étendu pour couvrir toute la plage du dispositif de capture d'image (110),
- sélectionnant une région de l'image présentant une fidélité de données acceptable, dans lequel la fidélité est acceptable lorsque le niveau de luminosité de l'image capturée est entre un seuil supérieur de luminosité et un seuil inférieur de luminosité, et
- définissant un emplacement du guide visuel (114), dans lequel l'emplacement du guide visuel (114) correspond à une région du dispositif de référence échantillon dans laquelle la fidélité de l'image est acceptable pour l'authentification ; et
dans lequel le seuil supérieur de luminosité correspond à un niveau de luminosité maximale auquel l'image capturée du dispositif d'authentification cible (140) est utilisable pour faciliter la vérification de l'authenticité ;
dans lequel le seuil supérieur de luminosité est un niveau de luminosité en dessous de la saturation de luminosité, la saturation de luminosité étant un phénomène tel qu'une augmentation du niveau de luminosité d'illumination au niveau du dispositif d'authentification cible (140) n'entraîne pas d'augmentation de l'échelle de gris ou du niveau de luminosité au niveau de l'image capturée.

2. Appareil d'authentification (1001) selon la revendication 1, dans lequel la plage de niveaux de luminosité prédéterminés est une plage dans laquelle la qualité et/ou la résolution de l'image capturée du dispositif d'authentification cible (140) sont suffisantes pour faciliter la vérification de l'authenticité.

3. Appareil d'authentification (1001) selon la revendication 1, dans lequel le seuil inférieur de luminosité correspond à un niveau de luminosité minimale auquel l'image capturée du dispositif d'authentification cible (140) est utilisable pour faciliter la vérification de l'authenticité.

4. Appareil d'authentification (1001) selon l'une quelconque des revendications précédentes, dans lequel le processeur (102) sert à traiter l'image capturée et à vérifier l'authenticité du dispositif d'authentification cible (140) ; et/ou à traiter l'image capturée pour générer une représentation visible des particularités de sécurité incorporées dans le dispositif d'authentification cible (140) pour qu'un utilisateur vérifie l'authenticité du dispositif d'authentification cible (140), et/ou l'appareil d'authentification (1001) inclut un dispositif d'affichage associé (108) et le processeur (102) sert à générer le guide visuel (114) sur le dispositif d'affichage associé (108), et/ou l'appareil d'authentification (1001) inclut un projecteur et le processeur (102) sert à générer le guide visuel (114) pour une projection par le projecteur.

5. Appareil d'authentification (1001) selon l'un quelconque des revendications précédentes, dans lequel le guide visuel (114) inclut un dispositif d'alignement pour un alignement avec un dispositif d'alignement correspondant sur le dispositif d'authentification cible (140), le guide visuel (114) et le dispositif d'émission de lumière (112) étant disposés de telle sorte qu'un axe de projection de lumière (X) correspondant à une ligne de l'illumination la plus brillante par le dispositif d'émission de lumière tombe à l'extérieur des particularités de sécurité du dispositif d'authentification cible (140) pendant des opérations de capture d'image lorsque l'appareil d'authentification (1001) est pointé sur le dispositif d'authentification cible (140) en suivant le guidage du guide visuel (114) de telle sorte que le dispositif d'alignement du guide visuel (114) et le dispositif d'alignement correspondant sur le dispositif d'authentification cible (140) sont alignés.

6. Appareil d'authentification (1001) selon l'une quelconque des revendications précédentes, dans lequel le dispositif d'authentification cible (140) comprend un dispositif de sécurité incorporé ayant des particularités de sécurité cachées, et le processeur (102) sert à traiter l'image capturée du dispositif d'authentification cible (140) pour extraire les particularités de sécurité pour l'affichage.

7. Appareil d'authentification (1001) selon l'une quelconque des revendications précédentes, dans lequel l'appareil d'authentification (1001) inclut une mémoire (106) pour stocker des caractéristiques d'un dispositif d'authentification de référence et le processeur (102) sert à vérifier l'authenticité du dispositif d'authentification cible (140) par référence à l'image capturée du dispositif d'authentification cible (140) ; et/ou dans lequel le processeur (102) sert à générer le guide visuel (114) lors de l'activation d'un processus d'authentification par un utilisateur, le processus d'authentification étant résident sur l'appareil d'authentification (1001).

8. Appareil d'authentification (1001) selon l'une quelconque des revendications précédentes, dans lequel le processeur (102) sert à générer le guide visuel (114) selon un processus d'authentification préenregistré, le processus d'authentification étant spécifique à un appareil et pouvant être téléchargé via Internet ou d'autres canaux de télécommunication.

9. Appareil d'authentification (1001) selon l'une quelconque des revendications précédentes, dans lequel le processeur (102) sert à accéder au processus d'authentification situé sur un serveur informatique distant pour faciliter la vérification.

10. Appareil d'authentification (1001) selon l'une quelconque des revendications précédentes, dans lequel l'appareil d'authentification (1001) est un dispositif mobile tel qu'un dispositif de télécommunication mobile, tel qu'un téléphone mobile, un téléphone intelligent, une tablette électronique ou un ordinateur doté d'une capacité de télécommunication, pouvant être chargé avec un processus d'authentification pour vérifier l'authenticité du dispositif d'authentification cible (140).

11. Procédé de capture d'image d'authentification à utiliser avec un appareil d'authentification (1001) selon la revendication 1 pour vérifier une authenticité d'un dispositif d'authentification cible (140) ayant des motifs de sécurité encodés numériquement,
dans lequel l'appareil d'authentification (1001) comprend : un dispositif de capture d'image (110), un dispositif d'émission de lumière (112) intégré pour projeter une lumière afin d'illuminer un objet à capturer par le dispositif de capture d'image (110), et un processeur (102) ;
le procédé incluant l'étalonnage d'un appareil d'authentification de référence pour concevoir un guide visuel (114), l'appareil d'authentification (1001) et l'appareil d'authentification de référence ayant le même dispositif d'émission de lumière (112) ou un dispositif équivalent et le même dispositif de capture d'image (110) ou un dispositif équivalent disposés dans la même interrelation ; et
le procédé incluant l'utilisation de l'appareil d'authentification (1001) pour générer le guide visuel (114) pour guider un utilisateur afin de pointer l'appareil d'authentification (1001) sur le dispositif d'authentification cible (140) lors de l'exécution d'un processus d'authentification de sorte que, lorsque l'appareil d'authentification (1001) est pointé sur le dispositif d'authentification cible (140) suite au guidage du guide visuel (114) pour capturer une image du dispositif d'authentification cible (140) et sous l'illumination opérationnelle du dispositif d'émission de lumière (112) lors de l'utilisation,
- les niveaux de luminosité de l'image sont dans d'une plage prédéterminée de niveaux de luminosité pour faciliter la vérification de l'authenticité, et
- le contenu et la qualité de fidélité de l'image capturée sont suffisants pour faciliter la vérification de l'authenticité du dispositif d'authentification cible (140), et
dans lequel l'étalonnage du dispositif d'authentification de référence comprend :
- la capture d'une image d'un dispositif d'authentification de référence sous l'illumination opérationnelle du dispositif d'émission de lumière (112),
- l'évaluation de l'image du dispositif d'authentification de référence en déterminant si un niveau de luminosité de l'image capturée est entre un seuil supérieur de luminosité et un seuil inférieur de luminosité, et
- la définition d'un emplacement du guide visuel (114), dans lequel l'emplacement du guide visuel (114) correspond à l'emplacement du dispositif d'authentification de référence dans une image capturée dans laquelle le niveau de luminosité de l'image est entre le seuil supérieur de luminosité et le seuil inférieur de luminosité ;
ou
- la capture d'une image d'un dispositif de référence échantillon sous l'illumination opérationnelle du dispositif d'émission de lumière (112), le dispositif de référence échantillon ayant un dispositif d'authentification de référence qui est étendu pour couvrir toute la plage du dispositif de capture d'image (110),
- la sélection d'une région de l'image présentant une fidélité de données acceptable, dans lequel la fidélité est acceptable lorsque le niveau de luminosité de l'image capturée est entre un seuil supérieur de luminosité et un seuil inférieur de luminosité, et
- la définition d'un emplacement du guide visuel (114), dans lequel l'emplacement du guide visuel (114) correspond à une région du dispositif de référence échantillon dans laquelle la fidélité de l'image est acceptable pour l'authentification ; et
dans lequel le seuil supérieur de luminosité correspond à un niveau de luminosité maximale auquel l'image capturée du dispositif d'authentification cible est utilisable pour faciliter la vérification de l'authenticité ;
dans lequel le seuil supérieur de luminosité est un niveau de luminosité en dessous de la saturation de luminosité, la saturation de luminosité étant un phénomène tel qu'une augmentation du niveau de luminosité d'illumination au niveau du dispositif d'authentification cible (140) n'entraîne pas d'augmentation de l'échelle de gris ou du niveau de luminosité au niveau de l'image capturée.

12. Procédé de capture d'image d'authentification selon la revendication 11, dans lequel la détermination du fait que le niveau de luminosité de l'image est ou non entre le seuil supérieur de luminosité et le seuil inférieur de luminosité comprend :
le calcul du nombre total de pixels ayant une luminosité dépassant le seuil supérieur de luminosité et le calcul du nombre total de pixels ayant une luminosité en dessous du seuil inférieur de luminosité,
dans lequel le niveau de luminosité de l'image est au-dessus du seuil supérieur de luminosité si le nombre total de pixels ayant une luminosité dépassant le seuil supérieur de luminosité est au-dessus d'un décompte seuil, et
dans lequel le niveau de luminosité de l'image est en dessous du seuil inférieur de luminosité si le nombre total de pixels ayant une luminosité tombant en dessous du seuil inférieur de luminosité est au-dessus d'un décompte seuil.

13. Procédé de capture d'image d'authentification selon la revendication 11 ou 12, dans lequel le procédé est sous la forme d'une application logicielle téléchargeable pour exécution sur un appareil d'authentification (1001) comprenant un processeur (102), et l'application téléchargeable est spécifique à un appareil de telle sorte qu'une application spécifique doit être téléchargée pour un appareil spécifique en référence au numéro de modèle de l'appareil d'authentification (1001) pour exécuter le procédé d'authentification.

14. Procédé de capture d'image d'authentification selon les revendications 11, 12 ou 13, dans lequel le procédé inclut l'identification d'une portion d'affichage d'un afficheur (108) associé à l'appareil d'authentification (1001), la portion d'affichage étant telle qu'une image du dispositif d'authentification cible (140) correspondant à une image apparaissant sur cette portion d'affichage lorsqu'elle est capturée de telle sorte que les niveaux de luminosité sur l'image capturée sont dans la plage prédéterminée de niveaux de luminosité fournira des données suffisantes pour faciliter la vérification de l'authentification ; le pointage de l'appareil d'authentification (1001) sur un dispositif d'authentification cible échantillon de telle sorte qu'une image du dispositif d'authentification cible apparaîtra sur une portion d'un afficheur (108), la capture d'une image du dispositif d'authentification cible échantillon lorsqu'il est sous l'illumination du dispositif d'émission de lumière (112), l'analyse des niveaux de luminosité sur l'image capturée, la conception du guide visuel (114) sur cette portion d'affichage lorsque les niveaux de luminosité sur l'image capturée sont dans la plage prédéterminée de niveaux de luminosité ; et dans lequel la plage prédéterminée de niveaux de luminosité est une plage dans laquelle les niveaux de luminosité de tous les pixels de l'image capturée ne sont ni surexposés ni sous-exposés.

15. Procédé de capture d'image d'authentification selon la revendication 14, dans lequel le procédé inclut, la sélection d'un emplacement relatif où l'image capturée a une distribution plus uniforme de l'intensité des pixels comme l'emplacement pour définir le guide visuel (114) où il y a plus d'un emplacement qui donne un résultat d'authentification correct.
